# FASCICULE DE BREVET EUROPEEN

(11) **EP 1 520 463 B1**
(45) Date de publication et mention de la délivrance du brevet: **13.12.2006**
(21) Numéro de dépôt: 04358007.5
(22) Date de dépôt: 23.09.2004
(51) Int. Cl.: A01D 46/26, A01D 46/28

(54) **Dispositif de fixation amovible des doigts de secouage des peignes mobiles d'appareils de récolte aérienne de petits fruits**
Vorrichtung zum lösbaren Verbinden eines Schüttlersfingers für bewegliche Kämme von Vorrichtungen zum Ernten von Kleinfrüchten
Device for detachably linking movable combs shaking fingers of a small fruits harvesting apparatus

(30) Priorité: 01.10.2003 FR 0311518
(43) Date de publication de la demande: 06.04.2005
(73) Titulaire: PELLENC (Société Anonyme), 84120 Pertuis (FR)
(72) Inventeur: Pellenc, Roger, 84120 Pertuis (FR)
(74) Mandataire: Marek, Pierre

(56) Documents cités:
- EP-A- 1 175 823
- US-A- 3 636 688
- US-B1- 6 199 358

## Description

La présente invention concerne un dispositif de fixation amovible des doigts de secouage des peignes démontables d'appareils de récolte de petits fruits tels que, par exemple, olives, amandes, cerises du caféier, mirabelles et autres, tel que décrit dans la revendication 1. Elle vise aussi les peignes mobiles et les appareils de récolte, particulièrement les appareils de récolte portables, munis de tels doigts de secouage.

Un appareil de ce genre est, par exemple, décrit dans le document EP 1.116.432. Il comprend une perche pourvue d'une poignée de commande et dont l'extrémité distale est munie d'une tête de récolte comprenant une pluralité de doigts mobiles destinés à être introduits dans la frondaison des arbres fruitiers à récolter, et une motorisation permettant de mouvoir l'ensemble des doigts, de façon à secouer la ramure desdits arbres et à provoquer le détachement des fruits. La tête de récolte de cet appareil comprend un peigne mobile constitué d'un support de doigts et d'une pluralité de doigts implantés individuellement et de façon amovible sur ledit support de doigts. Chaque doigt est fixé, par l'intermédiaire de l'une de ses extrémités et par collage, dans une douille de montage métallique traversant l'un des perçages diamétraux dont est pourvu le support de doigts, cette douille de montage étant munie d'un épaulement d'appui, tandis que son extrémité libre est pourvue d'un filetage destiné à recevoir un écrou assurant la fixation et le blocage en position du doigt sur le support de doigts qui se trouve serré entre ledit épaulement et ledit écrou.

Le peigne mobile ainsi constitué est monté avec une aptitude de mouvement de va-et-vient et il est accouplé à des moyens d'entraînement permettant de lui communiquer ce mouvement.

A l'usage, il s'est avéré qu'un tel dispositif de fixation amovible des doigts sur le support de doigts générait des inconvénients résumés ci-après.

Compte tenu de leur exécution en métal, les douilles de montage des doigts contribuent à alourdir le peigne oscillant ce qui engendre une inertie lors des mouvements oscillants des doigts, cette inertie ayant pour conséquence une importante consommation d'énergie.

L'aptitude des doigts à remplir efficacement la fonction qui leur est assignée est relativement limitée dans le temps et cela pour au moins deux raisons :
- les doigts exécutés en matériau composite à base de fibres de verre, fibres aramides, fibres de carbone, ou autres (matériaux peu élastiques) sont encastrés dans la douille métallique de montage, ce qui occasionne fréquemment des ruptures desdits doigts au ras de cet encastrement ;
- sous l'effet du mouvement oscillant à des fréquences importantes (par exemple de l'ordre de 20 Hz), les trous ménagés dans le support de doigts pour le passage des douilles de montage des doigts, s'agrandissent progressivement de sorte que lesdits doigts de secouage se désolidarisent du support, ce qui nuit à l'efficacité de l'ensemble et conduit à la détérioration de celui-ci ; on a en effet constaté que l'existence d'un jeu, même très réduit, dans la fixation des doigts, se trouve rapidement amplifié, compte tenu des conditions de travail du peigne de récolte, ce qui provoque un bringuebalement desdits doigts entraînant la rupture de ceux-ci dans des délais plus ou moins brefs.

L'écrou métallique saillant de blocage des doigts a tendance à blesser la végétation.

Le dispositif de fixation n'offre aucune possibilité de contrôle du serrage de l'écrou, de sorte que soit on écrase trop le support de doigts tubulaire, soit on ne serre pas suffisamment ledit écrou, ce qui engendre une oscillation bringuebalante des doigts, conduisant à la rupture de ceux-ci, ou à la rupture dudit support de doigts.

Enfin, le coût des doigts de secouage se trouve grevé par le fait que les doigts et leur douille de montage métallique doivent être usinés et assemblés par collage.

Dans le document US-6.199.358, est décrit un dispositif de fixation des doigts ou dents sur la barre de ramassage d'une moissonneuse. Chaque doigt comporte une extrémité en forme de selle entourant partiellement la barre et un tenon central traversant un trou ménagé dans ladite barre. Une vis traversant un trou diamétralement opposé se visse dans un taraudage axial du tenon central en assurant ainsi la fixation du doigt sur la barre. Un tel système peut convenir à la fixation d'un doigt sur la barre d'une machine tournant lentement autour de son axe, telle que la barre de ramassage d'une moissonneuse, mais il ne résisterait pas à un montage sur un support de doigts oscillant à des fréquences importantes, du fait de la nécessité d'un jeu de montage entre le support et le doigt cylindrique.

Dans le document EP-0.475.405, est décrit un autre type de fixation des doigts ou dents également sur la barre de ramassage d'une moissonneuse. Dans ce cas, chaque doigt comporte une extrémité constituée par un oeillet fendu permettant son montage sur la barre. La fixation est obtenue au moyen d'une vis traversant à la fois l'oeillet fendu et la barre. L'observation faite précédemment au sujet du document US-6.199.358, est également valable pour le système décrit dans le document EP-0.475.405. Les dispositifs de fixation représentés dans ces deux documents sont pratiquement inapplicables à la tête de récolte d'un appareil du genre de celui qui est décrit dans le document EP-1.116.432.

L'invention a notamment pour but de mettre à la disposition des utilisateurs d'appareils de récolte aérienne de petits fruits équipés de peignes mobiles, un système de fixation amovible des doigts ou tiges de secouage des peignes mobiles de ce type d'appareils, dépourvu des inconvénients exposés ci-dessus.

Selon l'invention, cet objectif est atteint grâce à un dispositif de fixation amovible comprenant deux pièces coopérantes dont l'une est destinée à être rendue solidaire de l'extrémité proximale d'un doigt de secouage, ces pièces étant conformées de sorte que lorsqu'elles sont engagées à l'intérieur de trous diamétralement opposés dont est pourvu un support de doigts, leur déplacement axial relatif de rapprochement à travers ledit support de doigts, provoque leur centrage sans jeu et leur serrage dans lesdits trous ; ledit dispositif comprenant encore un moyen assurant l'assemblage rigide démontable et le serrage desdites pièces sur le support de doigts.

Selon une autre disposition caractéristique, le dispositif de fixation amovible comprend deux pièces s'engageant l'une dans l'autre et pouvant se déplacer axialement l'une par rapport à l'autre, soit une première pièce constituée par une douille munie d'un évidement dans lequel peut être emmanchée l'extrémité proximale d'un doigt de secouage, et une deuxième pièce pourvue d'un évidement axial dans lequel peut être insérée l'extrémité proximale de ladite première pièce, lesdites première et deuxième pièces étant conformées de sorte que leur montage dans les trous coaxiaux d'un support de doigts pourvu de trous répartis sur sa longueur, et leur rapprochement au travers de ce dernier, provoque leur centrage sans jeu dans lesdits trous coaxiaux.

Cet agencement permet un montage facile, rapide et ferme des doigts de secouage sur les supports de doigts des peignes mobiles et un démontage tout aussi aisé et rapide desdits doigts. Il assure, d'autre part, un centrage parfait des doigts dans les trous de montage du support de doigts et une oscillation régulière et non pas bringuebalante desdits doigts, ce qui supprime ainsi l'une des causes essentielles de leur rupture prématurée. Il permet enfin un rattrapage aisé et rapide des jeux qui pourraient éventuellement apparaître après une certaine durée d'utilisation de l'appareil de récolte.

Dans la description qui suit et dans les revendications, la première pièce de serrage du dispositif de fixation dans laquelle peut être emmanchée la tige de secouage sera dénommée "pièce de montage" ; tandis que la deuxième pièce de serrage dudit dispositif sera appelée "pièce de serrage", afin de distinguer les deux pièces du dispositif de fixation et de faciliter l'exposé de l'invention.

Selon un mode d'exécution avantageux et préféré, la pièce de montage et la pièce de serrage constituant le dispositif de fixation du doigt de secouage comportent une surface tronconique, ces surfaces tronconiques inversement orientées constituant les moyens de centrage assurant également le serrage desdites pièces dans les trous du support de doigts.

Ce mode d'exécution permet un centrage sans jeu et un serrage des doigts sur le support de doigts, et permet un rattrapage des jeux éventuels.

Selon une autre disposition caractéristique, le dispositif de fixation amovible comprend un support de doigts tubulaire pourvu d'une pluralité de trous répartis sur sa longueur, et des doigts de secouage fixés sur ledit support de doigts, par l'intermédiaire dudit dispositif, celui-ci étant encore caractérisé en ce que les trous de montage du support de doigts destinés à la réception de la pièce de montage, et les trous du support de doigts destinés à la réception de la pièce de serrage dudit dispositif de fixation, sont également délimités par des surfaces coniques sur lesquelles viennent en appui les surfaces coniques des pièces du dispositif de fixation.

Grâce à cet agencement, l'effet de centrage et de serrage sans jeu des doigts dans les trous du support de doigts, est encore amélioré du fait que les vibrations des doigts, en cours de travail, n'engendrent aucune ovalisation des trous de montage, même après une longue durée d'usage. D'autre part, les zones de centrage coniques des pièces emboîtées constituant l'extrémité proximale des doigts et des trous de montage du support de doigts, permettent, également, une récupération du jeu de montage lié à la tolérance de fabrication des différents éléments ou à l'usure éventuelle du support de doigts, cette usure étant notamment liée au remplacement des doigts au cours de la vie de l'outil de récolte.

Suivant une autre disposition caractéristique, le moyen assurant l'assemblage rigide démontable et le serrage des pièces du dispositif de fixation est constitué par un système hélicoïdal de serrage.

De manière préférée, ce système comprend une vis traversant un passage axial ménagé dans le fond de la pièce de serrage et un passage axial prévu dans l'extrémité proximale de la pièce de montage, cette vis se vissant dans un évidement axial, taraudé ou non, que présente la portion terminale de l'extrémité proximale du doigt de secouage emmanché dans l'évidement de ladite pièce de montage.

Cette disposition autorise une fixation de l'extrémité proximale de la tige constituant le doigt de secouage dans l'évidement axial de la pièce de montage du dispositif de fixation, par simple emmanchement à force, c'est-à-dire sans opération de collage.

Selon une autre disposition caractéristique, la face d'extrémité de la pièce de serrage est munie d'un lamage dans lequel se trouve noyée la tête de la vis, dans la position d'assemblage de la pièce de montage et de la pièce de centrage constituant le dispositif de fixation.

Grâce à cette disposition, les doigts ne comportent aucune pièce métallique proéminente susceptible d'occasionner des blessures dans la végétation.

Selon une autre disposition caractéristique, les deux pièces de centrage et de serrage constituant le dispositif de fixation selon l'invention, sont exécutées en matière plastique.

Il en résulte un allégement sensible des doigts de secouage et du peigne oscillant équipé de ces doigts, de sorte que l'inertie de ce dernier se trouve notablement diminuée et que l'on obtient une réduction importante de la consommation d'énergie nécessaire à la mise en mouvement dudit peigne. En outre, la réalisation de la pièce de montage en matière plastique présentant des propriétés élastiques, permet d'envisager une fixation de l'extrémité proximale de la tige de secouage par simple emmanchement à force dans ladite pièce. En effet, en raison de cette élasticité, le déplacement du doigt de secouage en direction du support de doigts, provoque une constriction de la pièce de montage entraînant un resserrement accru de cette dernière autour de la tige de secouage.

Selon une autre disposition caractéristique, la pièce de montage en matière plastique dans laquelle est emmanchée l'extrémité proximale du doigt de secouage comporte un fourreau, de préférence de forme conique, qui s'étend à partir du moyen de serrage de ladite pièce, en direction de l'extrémité distale du doigt, ce fourreau enserrant la tige en composite à base de fibres de carbone ou autres constituant le doigt de secouage proprement dit.

Grâce à la forme et à l'élasticité de ce fourreau, on supprime la cassure fréquente des doigts au ras de leur enchâssement dans une douille métallique.

Les dispositions caractéristiques précédemment décrites permettent d'augmenter la fiabilité et la durée de vie des doigts de la tête de travail des appareils de récolte.

Selon une autre disposition caractéristique, l'extrémité proximale de la pièce de montage, présente une forme cylindrique à partir du moyen de serrage de ladite pièce, tandis que la pièce de serrage comporte un logement axial cylindrique dans lequel s'engage la portion cylindrique proximale de la pièce de montage.

Selon une autre disposition caractéristique, la pièce de montage et la pièce de serrage sont conformées de sorte que lorsque les surfaces de serrage desdites pièces viennent au contact des surfaces coniques des surfaces d'appui du support de doigts tubulaire, un petit intervalle se trouve ménagé entre l'extrémité proximale de la pièce de montage et le fond de l'évidement axial de la pièce de serrage.

Grâce à cette disposition, il est possible de garantir une bonne liaison entre les doigts et le support de doigts et de rattraper les jeux éventuels.

Les buts, caractéristiques et avantages ci-dessus et d'autres encore, ressortiront mieux de la description qui suit et des dessins annexés dans lesquels:
La figure 1 est une vue en perspective d'un exemple de réalisation de peigne secoueur d'appareil de récolte, auquel peut être appliquée l'invention.
La figure 2 est une vue éclatée, en perspective et à plus grande échelle, illustrant un doigt de secouage et son dispositif de fixation, réalisés selon l'invention.
La figure 3 est une vue éclatée montrant, en coupe axiale et en alignement, le dispositif de fixation de doigts de secouage selon l'invention, avant assemblage de ses éléments constitutifs.
La figure 4 est une vue en coupe axiale montrant la fixation d'un doigt de secouage sur un support de doigts.
La figure 5 est une vue en coupe axiale semblable à la figure 4, illustrant la récupération d'un jeu de montage dû à une tolérance de fabrication ou à un agrandissement des trous ou perçages diamétraux de montage du support de doigts résultant d'une usure.
La figure 6 est une vue en coupe axiale d'une variante de réalisation du dispositif de fixation amovible.
Les figures 7 et 8 sont des vues en coupe axiale illustrant deux exemples de réalisation d'un autre mode d'exécution de l'invention.

On se reporte auxdits dessins pour décrire des exemples de réalisation avantageux, quoique nullement limitatifs, du dispositif de fixation de doigts de secouage selon l'invention et des peignes de récolte munis de doigts fixés à l'aide de ce dispositif.

La tête de récolte des appareils de récolte portables du genre de celui qui est décrit dans le document EP-1.116.432A comprend un peigne mobile animé d'un mouvement de va-et-vient ou d'oscillation et constitué d'un support de doigts 1 et d'une pluralité de doigts 2 fixés, de manière amovible, sur celui-ci.

Le support de doigts 1 est, de préférence, constitué par un tube cylindrique munis de perçages diamétraux ou de trous 1 a, de l'une de ses extrémités à l'autre, pour le montage amovible des doigts.

Les doigts 2 peuvent être constitués par des tiges, pleines ou tubulaires, de section cylindrique ou autre. Ils sont avantageusement exécutés en matériau composite à base de fibres de verre, ou de fibres de carbone, ou de fibres aramides, ou autres, par exemple par un procédé de pultrusion. Ils présentent, par exemple, une longueur totale de l'ordre de 370 mm.

Ces doigts 2 comprennent une extrémité distale 2a et une extrémité proximale 2b permettant leur montage individuel et amovible sur le support de doigts 1.

Selon une importante disposition caractéristique de l'invention, ce montage est assuré par un dispositif de fixation comprenant deux pièces conformées de sorte que leur montage dans les trous coaxiaux 1 a du support de doigts 1, et leur déplacement axial de rapprochement à travers ce dernier, provoque leur centrage sans jeu latéral dans lesdits trous coaxiaux 1a.

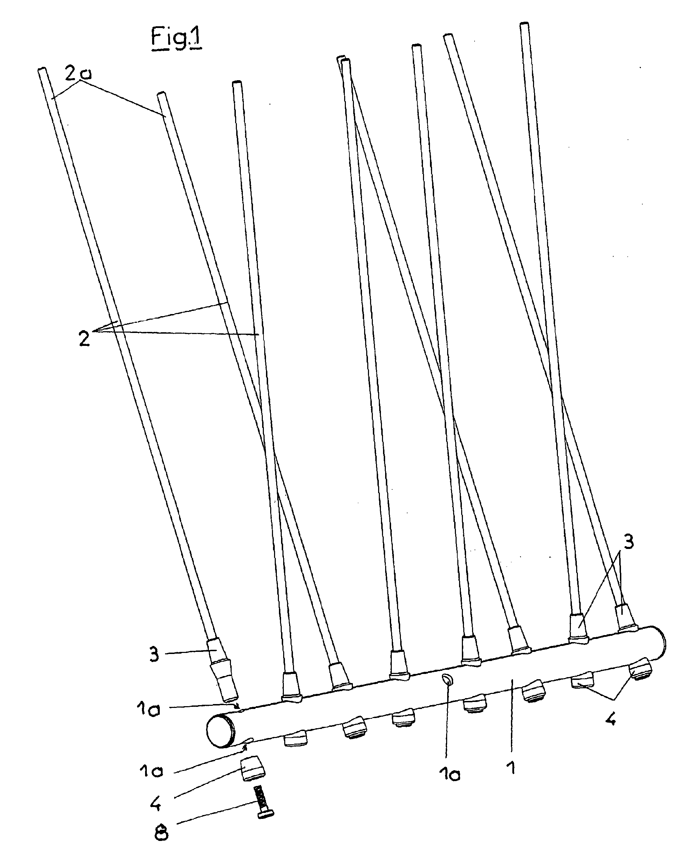

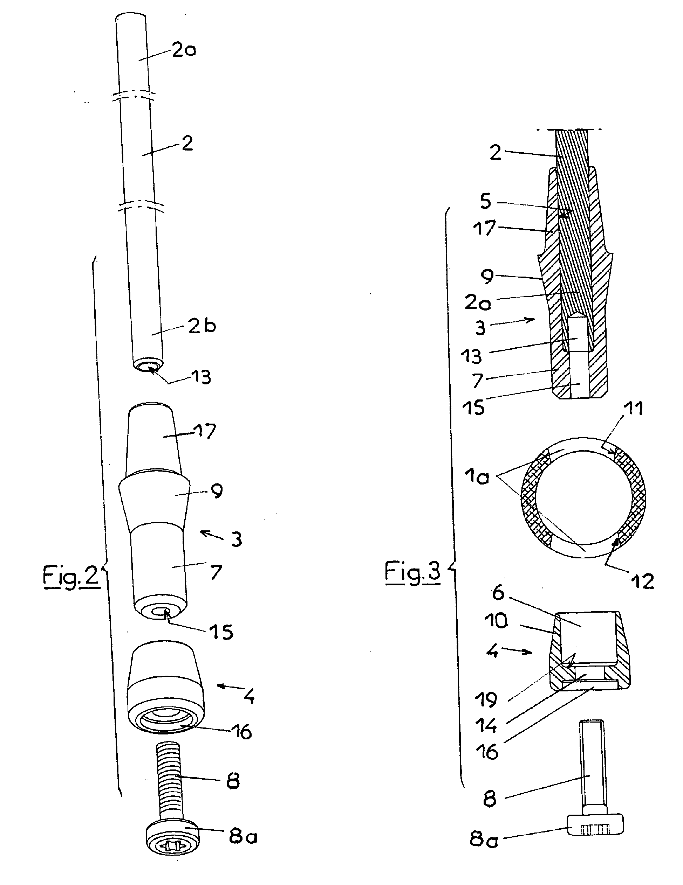

Selon le mode de réalisation préféré illustré sur les figures 1 à 5 des dessins, le dispositif de fixation comprend deux pièces de centrage et de serrage 3 et 4 conformées pour pouvoir s'engager l'une dans l'autre et se déplacer axialement l'une par rapport à l'autre.

L'une de ces pièces (pièce de montage) est constituée par une douille 3 pourvue d'un évidement axial 5 dans lequel est emboîtée ou peut être emboîtée l'extrémité proximale 2b de la tige constituant le doigt de battage ou de secouage 2 proprement dit, de préférence au moyen d'un simple emmanchement à force.

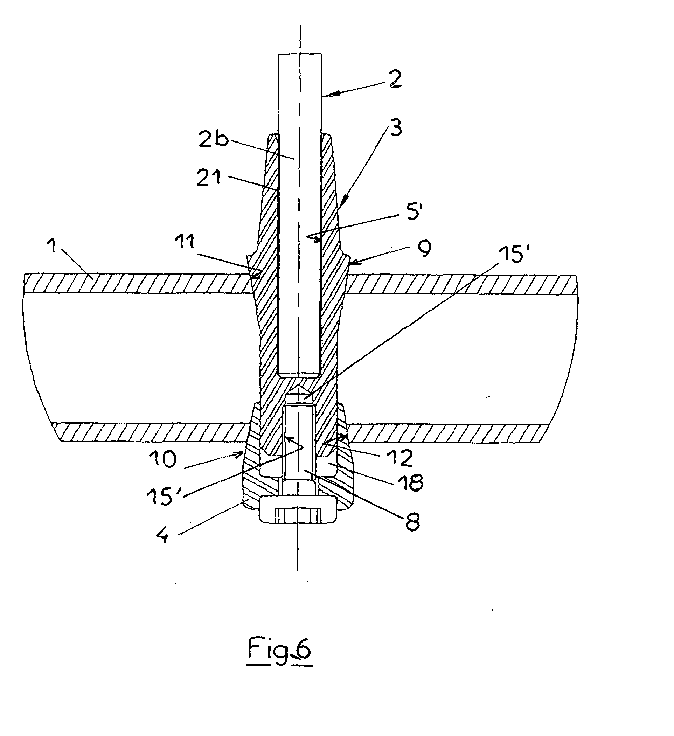

Toutefois, la tige 2 pourrait aussi être rendue solidaire de la pièce 3 par collage (comme le montre la figure 6) ou par réalisation de ladite pièce par un procédé de surmoulage.

La pièce 4 (pièce de serrage) est également constituée par une douille pourvue d'un évidement axial 6 dans lequel peut être insérée, avec une latitude de coulissement contrôlé, l'extrémité proximale 7 de la pièce 3 portant le doigt de secouage 2.

Les deux pièces 3 et 4 sont avantageusement exécutées en toute matière plastique présentant des propriétés de déformation élastique et les caractéristiques de rigidité et autres nécessaires, telles que par exemple, polyacétals, et, notamment en polyoxyméthylènes (POM) ; elles sont conformées ou agencées pour permettre leur serrage sur un support de doigts 1 pourvu de trous 1 a.

Le dispositif selon l'invention comprend encore un moyen assurant l'assemblage rigide démontable des pièces 3 et 4 et permettant leur auto-centrage et serrage sur le support de doigts 1, ce moyen étant de préférence constitué par un système hélicoïdal de serrage.

Selon le mode de réalisation préféré illustré aux figures 1 à 5, la pièce de montage 3 portant le doigt de secouage 2 et la pièce de serrage 4, comportent une surface latérale conique sur au moins une portion de leur longueur. Ces portions coniques, respectivement 9 et 10, sont inversement orientées et sont destinées à être engagées dans les trous diamétralement opposés 1 a du support de doigts. Elles constituent, de la sorte, les moyens de centrage sans jeu assurant le serrage des pièces 3 et 4 du dispositif de fixation et, plus généralement, des doigts de secouage dans les trous du support de doigts.

Selon une autre disposition caractéristique de l'invention, les trous 1 a du support de doigts 1 permettant l'insertion des portions coniques 9, 10, respectivement, des pièces 3 et 4, sont également délimités par des surfaces coniques 11 et 12. De la sorte, lorsque les pièces 3 et 4 sont engagées dans les trous 1a du support de doigts 1, leurs surfaces coniques 9 et 10, viennent en appui sur les surfaces coniques des trous 11 et 12, respectivement, de sorte que lesdites pièces se trouvent "enchâssées" dans lesdits trous, sans aucun jeu latéral.

L'angle au sommet des parties coniques 9, 10, 11 et 12, est, de préférence, compris entre 5° et 30°.

L'agencement ci-dessus correspond à un mode d'exécution de l'invention simple, facile à mettre en oeuvre et d'une remarquable efficacité. Toutefois, les pièces coopérantes du dispositif de fixation pourraient avoir d'autres conformations et/ou d'autres moyens de liaison assurant leur auto-centrage sans jeu dans les trous du support de doigts, par simple déplacement axial de rapprochement desdites pièces, comme cela est exposé dans la suite de la description.

L'extrémité proximale 7 de la douille 3 présente, de manière préférée, une forme cylindrique, à partir de la petite base de la portion tronconique 9 de montage de ladite douille, tandis que l'évidement 6 de la pièce de centrage 4 dans lequel s'emboîte ladite extrémité proximale 7, présente une forme cylindrique complémentaire.

Suivant un mode d'exécution intéressant, l'extrémité proximale 2b des tiges 2 constituant les doigts de secouage proprement dits, est pourvue d'un évidement axial cylindrique 13, taraudé ou lisse.

D'autre part, le système hélicoïdal de serrage des pièces 3 et 4 comprend, avantageusement et de manière préférée, une vis 8 traversant un passage axial 14 ménagé dans le fond de la pièce de serrage 4 et un passage axial 15 que présente l'extrémité proximale de la pièce de montage 3, cette vis se vissant dans l'évidement axial borgne 13 prévu dans l'extrémité proximale 2b de la tige 2 emboîtée dans ladite pièce 3. De préférence, cette vis 8 est du genre autotaraudeuse pour matière plastique et se visse à la fois dans l'extrémité proximale de la pièce 3 et dans l'extrémité proximale 2b de la tige de secouage 2.

On prévoit d'introduire de la colle et notamment de la colle à base de résines époxydes, dans l'évidement axial borgne 13 de la tige 2, avant vissage de la vis 8. Cette colle, poussée et répartie contre la surface latérale de l'évidement axial 13 par la vis 8, évite la fissuration dans le sens des fibres ou délaminage de la tige 2 sous l'effet des vibrations, après une certaine durée d'usage.

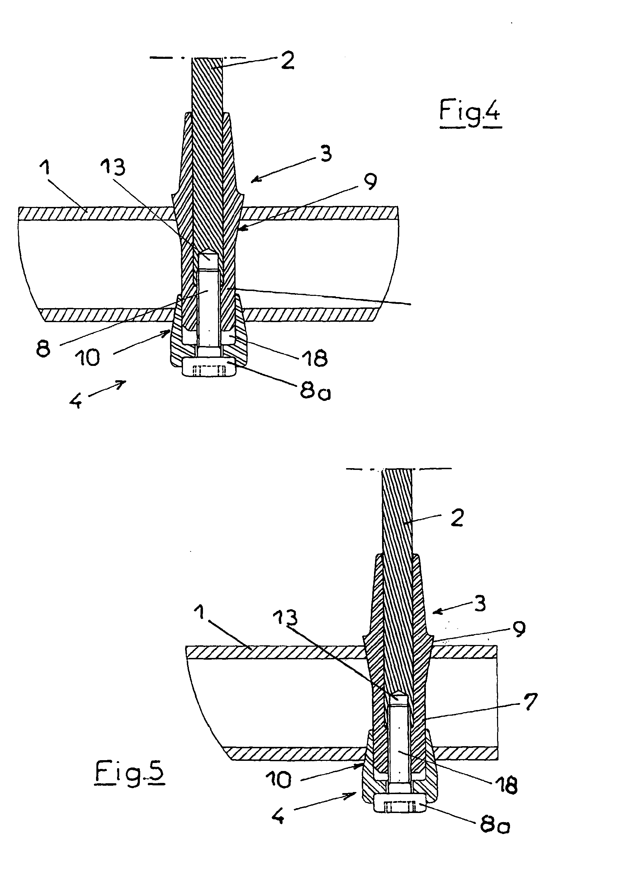

La face d'extrémité de la pièce de serrage 4 est munie d'un lamage 16 dans lequel se trouve logée la tête 8a de la vis 8, lorsque le doigt 2 est fixé sur le support de doigts (figures 4 et 5).

Selon une autre disposition intéressante, la portion distale 17 de la pièce de montage 3, dans laquelle est emboîtée l'extrémité proximale du doigt de secouage 2 est constituée par un fourreau, de préférence de forme conique, qui s'étend à partir de la grande base de la portion conique de montage 9 de ladite pièce, en direction de l'extrémité distale du doigt.

On observe que les pièces 3 et 4 du dispositif de fixation sont conformées et dimensionnées de sorte que lorsque les surfaces coniques de serrage 9, 10 desdites pièces viennent au contact des surfaces coniques 11, 12 des trous 1a de montage du support de doigts tubulaire 1, un petit intervalle 18 se trouve ménagé entre l'extrémité proximale de la pièce de montage 3 et le fond de l'évidement axial 6 de la pièce de centrage 4. Cet intervalle permet de garantir une excellente liaison entre les doigts 2 et le support de doigts 1 et autorise un rattrapage du jeu éventuel.

D'autre part, le fond de l'évidement 6 de la pièce de centrage 4 dans lequel est prévu le passage 14, forme un épaulement 19 lequel constitue une butée contre laquelle viendrait en appui la face d'extrémité de la pièce de montage 3, dans la position de serrage maximum desdites pièces, de sorte à éviter l'écrasement du support de doigts 1.

On conçoit que l'implantation d'un doigt de secouage 2 sur le support de doigts 1 et son démontage, peuvent s'opérer facilement et rapidement, avec le dispositif de fixation selon l'invention. Pour le démontage, il suffit de retirer la vis 8 et de déboîter la pièce de serrage 4, pour pouvoir extraire le doigt et la pièce de montage dans laquelle est emboîté ce dernier. Pour le montage du doigt, la pièce de montage 3 dans laquelle est emboîté celui-ci est engagée dans le trou 1 a du support de doigts 1 et la pièce de serrage 4 est insérée dans le trou 1 a diamétralement opposé, de sorte que l'extrémité proximale de ladite pièce de montage 3 vienne s'emboîter dans l'évidement 6 de ladite pièce de serrage 4. Il suffit ensuite d'introduire et de visser la vis 8, pour obtenir le rapprochement des pièces 3 et 4 et leur serrage sur le support de doigts 1.

Le doigt de secouage se trouve ainsi fixé durablement, sans aucun jeu, aussi bien lors de sa mise en place qu'après une longue période d'usage, en faisant corps avec le support de doigts, ce qui assure un fonctionnement fiable durable de la tête de récolte.

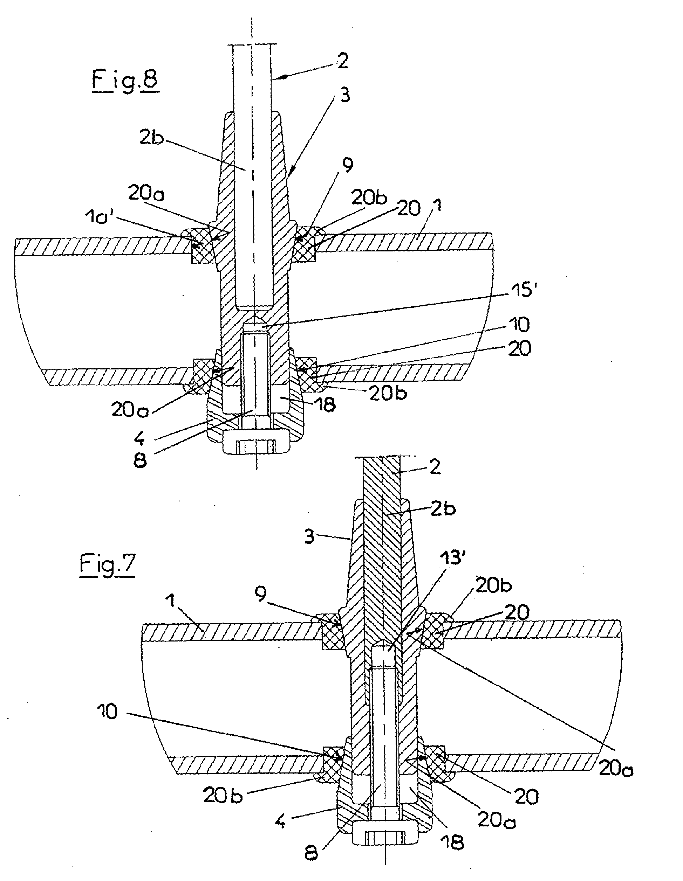

On a représenté, à la figure 6, une variante de réalisation du mode d'exécution qui vient d'être décrit et, aux figures 7 et 8, deux exemples de configuration, d'un deuxième mode d'exécution de l'invention.

Les mêmes références numériques sont utilisées pour désigner les organes du dispositif de fixation et les parties de ces derniers communs aux différents exemples de réalisation décrits et/ou remplissant les mêmes fonctions.

Selon la variante d'exécution illustrée à la figure 6, l'extrémité proximale 2b du doigt de secouage 2 est emboîtée ou encastrée par exemple par collage au moyen d'une pellicule 20 de colle à base de résines époxydes ou autres adhésifs structuraux, dans un premier évidement axial 5' débouchant à l'extrémité distale de la pièce de montage 3, tandis que la vis d'assemblage 8, de préférence constituée par une vis autotaraudeuse, se visse dans un deuxième évidement axial 15' débouchant à l'extrémité proximale de ladite pièce de montage. Dans ce cas, la vis 8 ne se visse donc pas dans l'extrémité proximale 2b de la tige 2 mais dans la pièce de montage 3.

On observe que grâce à la réalisation de la pièce de montage 3 dans une matière plastique possédant des propriétés de déformation élastique, il est possible de fixer l'extrémité proximale 2b de la tige de secouage 2 dans l'évidement 5' de ladite pièce par simple emmanchement à force, c'est-à-dire sans utilisation de colle. La fixation solide de la tige de secouage 2 dans la pièce de montage 3 est obtenue, lors du montage sur le support de doigts 1, par le déplacement du doigt de secouage 2-3 en direction dudit support de doigts. Lors de ce mouvement, la pénétration de la portion conique 9 de la pièce de montage 3 dans le trou 1 a du support de doigts, provoque une constriction de ladite pièce de montage entraînant un resserrement accru de cette dernière autour de la tige de secouage, laquelle se trouve ainsi solidement maintenue dans la pièce de montage.

Selon les deux exemples de réalisation du mode d'exécution représenté aux figures 7 et 8, les trous 1a' du support de doigts 1 sont délimités par des surfaces cylindriques.

Afin d'obtenir le meilleur effet de centrage et de serrage par la coopération de surfaces coniques complémentaires, des bagues 20 comportant un trou délimité par une surface conique 20a pour l'appui et le centrage des surfaces coniques 9 ou 10 de la pièce de montage 3 et de la pièce de serrage 4, respectivement, sont encastrées dans les trous cylindriques 1a' du support de doigts 1. Ces bagues peuvent être avantageusement exécutées dans un matériau déformable, de préférence élastique, par exemple en polyuréthanne. Afin d'éviter qu'elles ne soient repoussées à l'intérieur du tube constituant le support de doigts 1, par exemple lors du montage des doigts, les bagues 20 à trou conique 20a sont munies d'une collerette extérieure 20b calée contre la surface externe dudit support de doigts et s'opposant, de ce fait, à tout mouvement desdites bagues en direction de l'intérieur de ce dernier.

On comprend que l'effet de parfait centrage des doigts dans les trous du support de doigts est, selon ce mode d'exécution, identique à celui obtenu au moyen de trous coniques directement exécutés dans ledit support de doigts (figures 1 à 5).

Selon la figure 7, les moyens de fixation de la tige 2 dans la pièce de montage 3 et les moyens d'assemblage des deux pièces 3 et 4 du dispositif de fixation sont identiques à ceux qui sont illustrés aux figures 1 à 5 (vis autotaraudeuse 8 se vissant dans un évidement axial 13' de l'extrémité proximale 2b de la tige 2).

Suivant la figure 8, les moyens de fixation de la tige 2 dans la pièce de montage 3 et les moyens d'assemblage des deux pièces principales 3 et 4 du dispositif de fixation sont identiques à ceux qui sont illustrés à la figure 6 (tige 2 collée dans un premier évidement axial 5' de la pièce de montage 3 et vis autoforeuse 8 se vissant dans un deuxième évidement axial 15' de ladite pièce de montage).

## Revendications

1. Dispositif de fixation amovible des doigts de secouage des peignes mobiles d'appareils de récolte aérienne de petits fruits, **caractérisé en ce qu**'il comprend deux pièces coopérantes (3, 4) dont l'une (3) est destinée à être rendue solidaire de l'extrémité proximale (2b) d'un doigt de secouage (2), ces pièces (3, 4) étant conformées de sorte que lorsqu'elles sont engagées à l'intérieur de trous (1a) diamétralement opposés dont est pourvu un support de doigts (1), leur déplacement axial de rapprochement à travers ce support de doigts, provoque leur centrage sans jeu dans lesdits trous (1a) ; ledit dispositif comportant encore un moyen (8) assurant l'assemblage rigide démontable et le serrage desdites pièces (3, 4) sur ledit support de doigts (1).

2. Dispositif selon la revendication 1, **caractérisé en ce qu**'il comprend deux pièces (3, 4) s'engageant l'une dans l'autre et pouvant se déplacer l'une par rapport à l'autre, soit une première pièce de centrage et de serrage ou pièce de montage constituée par une douille (3) munie d'un évidement (5, 5') dans lequel est emmanchée ou peut être emmanchée l'extrémité proximale (2b) d'un doigt de secouage (2) et une deuxième pièce de centrage ou pièce de serrage (4) pourvue d'un évidement axial (6) dans lequel peut être insérée l'extrémité proximale (7) de ladite première pièce (3), avec une possibilité de déplacement axial contrôlée.

3. Dispositif selon l'une des revendications 1 ou 2, **caractérisé en ce que** les première et seconde pièces de centrage et de serrage (3, 4) constituant le dispositif de fixation du doigt de secouage (2) comportent une surface latérale conique (9, 10), ces surfaces coniques inversement orientées constituant le moyen assurant le centrage et le serrage desdites pièces (3, 4) dans les trous (1a) du support de doigts (1).

4. Dispositif selon la revendication 3, comprenant un support de doigts tubulaire (1) pourvu d'une pluralité de trous (1a) répartis sur sa longueur et des doigts de secouage (2) fixés sur ledit support de doigts, par l'intermédiaire du dispositif de fixation selon la revendication 3, **caractérisé en ce que** les trous de montage (1a) destinés à la réception de la pièce de montage (3), et les trous (1a) du support de doigts destinés à la réception de la pièce de serrage (4) dudit dispositif de fixation, sont délimités par des surfaces coniques (11, 12).

5. Dispositif selon la revendication 3, comprenant un support de doigts tubulaire (1) pourvu d'une pluralité de trous cylindriques (1a') répartis sur sa longueur et de doigts de secouage (2) fixés sur ledit support de doigts, par l'intermédiaire du dispositif de fixation selon la revendication 3, **caractérisé en ce que** des bagues (20) comportant un trou délimité par une surface conique (20a) pour l'appui et le centrage des surfaces coniques (9 et 10) de la pièce de montage (3) et de la pièce de serrage (4), respectivement, sont encastrées dans lesdits trous cylindriques (1a').

6. Dispositif suivant la revendication 5, **caractérisé en ce que** lesdites bagues d'appui et de centrage (20) sont exécutées dans un matériau déformable, de préférence élastique.

7. Dispositif selon l'une des revendications 5 ou 6, **caractérisé en ce que** les bagues d'appui et de centrage (20) sont pourvues d'une collerette extérieure (20b) calée contre la surface externe du support de doigts (1).

8. Dispositif selon l'une quelconque des revendications 3 à 6, **caractérisé en ce que** l'angle au sommet des portions coniques (9, 10, 11, 12, 20a) des pièces de centrage et de serrage (3, 4) est compris entre 5° et 30°.

9. Dispositif selon l'une quelconque des revendications 1 à 8, **caractérisé en ce que** la pièce de montage (3) dans laquelle s'emboîte l'extrémité proximale (2b) du doigt de secouage (2), est réalisée en matière plastique, possédant des propriétés de déformation élastique.

10. Dispositif selon la revendication 9, **caractérisé en ce que** la tige de secouage (2) est simplement emboîtée dans l'évidement axial distal (5') de la pièce de montage, la fixation solide de ladite tige dans ladite pièce de montage étant assurée par la constriction de la portion conique (9) de cette dernière résultant de l'enfoncement de ladite portion conique (9) dans le trou de montage (1a, 1a') du support de doigts (1).

11. Dispositif suivant l'une quelconque des revendication 1 à 10, **caractérisé en ce que** la pièce de serrage (4) est réalisée en matière plastique.

12. Dispositif selon l'une quelconque des revendications 1 à 11, **caractérisé en ce que** le moyen assurant le serrage des pièces (3, 4) de fixation sur le support de doigts (1) est constitué par un système hélicoïdal de serrage.

13. Dispositif suivant la revendication 12, **caractérisé en ce que** ledit système hélicoïdal de serrage comprend une vis (8) traversant un passage axial (14) ménagé dans le fond de la pièce de serrage (4), et un passage axial prévu dans l'extrémité proximale de la pièce de montage (3), cette vis se vissant dans un évidement axial (13) que présente la portion terminale de l'extrémité proximale (2b) du doigt de secouage (2) emboîtée dans l'évidement (5) de ladite pièce de montage (3).

14. Dispositif selon la revendication 12, **caractérisé** :
- d'une part, en ce que l'extrémité proximale (2b) des doigts de secouage (2) est emboîtée ou encastrée, par exemple par collage au moyen d'une pellicule (19) de colle dans un premier évidement axial (5') de la pièce de montage (3), et,
- d'autre part, en ce que le système hélicoïdal de serrage comprend une vis autotaraudeuse (8) traversant un passage axial (14) ménagé dans le fond de la pièce de serrage (4), cette vis se vissant dans un deuxième évidement axial (15') de ladite pièce de montage (3) débouchant à l'extrémité proximale de celle-ci.

15. Dispositif suivant la revendication 13, **caractérisé en ce que** la surface latérale de l'évidement axial (13) que présente l'extrémité proximale (2b) de la tige (2) est recouverte de colle.

16. Dispositif selon l'une des revendications 13 ou 14, **caractérisé en ce que** la face d'extrémité de la pièce de serrage (4) est munie d'un lamage (16) dans lequel se trouve noyée la tête (8a) de la vis (8), dans la position de serrage de la pièce de montage (3) et de la pièce de serrage (4) sur le support de doigts (1).

17. Dispositif suivant l'une quelconque des revendications 1 à 16, **caractérisé en ce que** la pièce de montage (3) comporte une partie distale (17) qui s'étend à partir du moyen de serrage (9) en direction de l'extrémité distale (2a) du doigt de secouage (2), cette partie distale (17) enserrant la tige (2) constituant ledit doigt de secouage.

18. Dispositif selon la revendication 17, **caractérisé en ce que** la partie distale (17) de la pièce de montage (3) a la forme d'un cône dont la grande base se raccorde au moyen de centrage et de serrage (9) de ladite pièce (3).

19. Dispositif suivant l'une quelconque des revendications 1 à 18, **caractérisé en ce que** les pièces de centrage et de serrage (3, 4) sont conformées de sorte que lorsque les surfaces de centrage et de serrage (9, 10) desdites pièces viennent au contact des surfaces d'appui (11, 12) du support de doigts tubulaire (1), un petit intervalle (18) se trouve ménagé entre l'extrémité proximale de la pièce de montage (3) et le fond (19) de l'évidement axial (6) de la pièce de centrage (4).

20. Appareil portable de récolte aérienne de petits fruits, comportant un peigne de secouage constitué d'un support de doigts (1) et d'une pluralité de doigts (2) montés de manière amovible sur ledit support de doigts, **caractérisé en ce que** lesdits doigts de secouage (2) sont montés de manière amovible sur ce dernier, par l'intermédiaire de dispositifs de fixation selon l'une quelconque des revendications 1 à 19.

## Claims

1. A device for removably fixing the shaker fingers of the movable combs of apparatuses for aerial harvesting of small fruits **characterised in that** it comprises two co-operating parts (3, 4) of which one (3) is intended to be secured to the proximal end (2b) of a shaker finger (2), said parts (3, 4) being so shaped that when they are engaged in the interior of diametrally opposite holes (1a) with which a finger support (1) is provided, their axial approach displacement through said finger support causes them to be centered without play in said holes (1a); said device also comprising a means (8) for dismantleable rigid assembly and tightening of said parts (3, 4) on said finger support (1).

2. A device according to claim 1 **characterised in that** it comprises two parts (3, 4) which engage into each other and which can be displaced with respect to each other, namely a first centering and tightening part or assembly part formed by a sleeve (3) provided with an opening (5, 5') in which the proximal end (2b) of a shaker finger (2) is or can be fitted and a second centering part or tightening part (4) provided with an axial opening (6) in which the proximal end (7) of said first part (3) can be inserted with a controlled possibility of axial displacement.

3. A device according to one of claims 1 and 2 **characterised in that** the first and second centering and tightening parts (3, 4) constituting the fixing device for the shaker finger (2) comprise a conical lateral surface (9, 10), said conical surfaces which are inversely oriented constituting the means providing for centering and tightening of said parts (3, 4) in the holes (1a) in the finger support (1).

4. A device according to claim 3 comprising a tubular finger support (1) provided with a plurality of holes (1a) distributed over its length and shaker fingers (2) which are fixed on said finger support, by way of the fixing device according to claim 3, **characterised in that** the mounting holes (1a) intended to receive the mounting part (3) and the holes (1a) in the finger support which are intended to receive the tightening part (4) of said fixing device are delimited by conical surfaces (11, 12).

5. A device according to claim 3 comprising a tubular finger support (1) provided with a plurality of cylindrical holes (1a') distributed over its length and shaker fingers (2) fixed on said finger support, by means of the fixing device according to claim 3, **characterised in that** rings (20) comprising a hole delimited by a conical surface (20a) for contact with and centering of the conical surfaces (9 and 10) of the mounting part (3) and the tightening part (4) respectively are fixed in said cylindrical holes (1a').

6. A device according to claim 5 **characterised in that** said contact and centering rings (20) are made of a deformable material which is preferably elastic.

7. A device according to one of claims 5 and 6 **characterised in that** the contact and centering rings (20) are provided with an external collar (20b) which is fixed against the external surface of the finger support (1).

8. A device according to any one of claims 3 to 6 **characterised in that** the angle at the apex of the conical portions (9, 10, 11, 12, 20a) of the centering and tightening parts (3, 4) is between 5° and 30°.

9. A device according to any one of claims 1 to 8 **characterised in that** the mounting part (3) in which the proximal end (2b) of the shaker finger (2) engages is made of plastic material having elastic deformation properties.

10. A device according to claim 9 **characterised in that** the shaker rod (2) is simply fitted in the distal axial opening (5') of the mounting part, solid fixing of said rod in said mounting part being ensured by constriction of the conical portion (9) of the latter resulting from the conical portion (9) being forced into the mounting hole (1a, 1a') of the finger support (1).

11. A device according to any one of claims 1 to 10 **characterised in that** the tightening part (4) is made of plastic material.

12. A device according to any one of claims 1 to 11 **characterised in that** the means ensuring tightening of the fixing parts (3, 4) on the finger support (1) is formed by a helicoidal tightening system.

13. A device according to claim 12 **characterised in that** said helicoidal tightening system comprises a screw (8) passing through an axial passage (14) provided in the bottom of the tightening part (4) and an axial passage provided in the proximal end of the mounting part (3), said screw being screwed into an axial opening (13) in the terminal portion of the proximal end (2b) of the shaker finger (2), which is fitted into the opening (5) in said mounting part (3).

14. A device according to claim 12 **characterised**:
- on the one hand in that the proximal end (2b) of the shaker fingers (2) is fitted or fixed for example by glueing by means of a film (19) of glue, in a first axial opening (5') in the mounting part (3), and
- on the other hand in that the helicoidal tightening system comprises a self-tapping screw (8) passing through an axial passage (14) provided in the bottom of the tightening part (4), said screw being screwed into a second axial opening (15') in said mounting part (3) which opens at the proximal end thereof.

15. A device according to claim 13 **characterised in that** the lateral surface of the axial opening (13) that the proximal end (2b) of the rod (2) has is covered with glue.

16. A device according to one of claims 13 and 14 **characterised in that** the end face of the tightening part (4) is provided with a facing (16) in which the head (8a) of the screw (8) is sunk in the tightening position of the mounting part (3) and the tightening part (4) on the finger support (1).

17. A device according to any one of claims 1 to 16 **characterised in that** the mounting part (3) comprises a distal portion (17) which extends from the tightening means (9) in the direction of the distal end (2a) of the shaker finger (2), said distal portion (17) enclosing the rod (2) constituting said shaker finger.

18. A device according to claim 17 **characterised in that** the distal portion (17) of the mounting part (3) is in the shape of a cone of which the large base is connected to the centering and tightening means (9) of said part (3).

19. A device according to any one of claims 1 to 18 **characterised in that** the centering and tightening parts (3, 4) are shaped in such a way that when the centering and tightening surfaces (9, 10) of said parts come into contact with the contact surfaces (11, 12) of the tubular finger support (1) a small gap (18) is provided between the proximal end of the mounting part (3) and the bottom (19) of the axial opening (6) of the centering part (4).

20. A portable apparatus for aerial harvesting of small fruit comprising a shaker comb formed by a finger support (1) and a plurality of fingers (2) mounted removably on said finger support **characterised in that** said shaker fingers (2) are mounted removably on the latter by means of fixing devices according to any one of claims 1 to 19.

## Patentansprüche

1. Vorrichtung zur lösbaren Befestigung der Schüttelfinger der beweglichen Kämme von Geräten für die oberirdische Ernte von Kleinfrüchten, **dadurch gekennzeichnet, dass** sie zwei zusammenwirkende Bauteile (3, 4) aufweist, von denen eines (3) dazu bestimmt ist, mit dem nahen Ende (2b) eines Schüttelfingers (2) fest verbunden zu werden, wobei diese Bauteile (3, 4) so gestaltet sind, dass, wenn sie in einander diametral gegenüberliegende Löcher (1a) eingeführt sind, mit denen ein Fingerträger (1) versehen ist, ihre axiale Annäherungsbewegung durch diesen Fingerträger hindurch ihre Zentrierung ohne Spielraum in den Löchern (1a) bewirkt; wobei die Vorrichtung weiter ein Mittel (8) aufweist, das den demontierbaren steifen Zusammenbau und die Klemmbefestigung der Bauteile (3, 4) auf dem Fingerträger (1) gewährleistet.

2. Vorrichtung nach Anspruch 1, **dadurch gekennzeichnet, dass** sie zwei Bauteile (3, 4) aufweist, die ineinander gefügt werden und sich zueinander verschieben können, nämlich ein erstes Zentrier- und Klemmbefestigungsteil oder Montageteil, das aus einer Hülse (3) besteht, die mit einer Aussparung (5, 5') versehen ist, in die das nahe Ende (2b) eines Schüttelfingers (2) eingeschoben ist oder eingeschoben werden kann, und ein zweites Zentrier- oder Klemmbefestigungsteil (4), das mit einer axialen Aussparung (6) versehen ist, in die das nahe Ende (7) des ersten Bauteils (3) mit der Möglichkeit der kontrollierten axialen Verschiebung eingeführt werden kann.

3. Vorrichtung nach einem der Ansprüche 1 oder 2, **dadurch gekennzeichnet, dass** das erste und das zweite Zentrier- und Klemmbefestigungsteil (3, 4), die die Befestigungsvorrichtung des Schüttelfingers (2) bilden, eine kegelförmige Seitenfläche (9, 10) aufweisen, wobei diese umgekehrt ausgerichteten Kegelflächen das Mittel bilden, das die Zentrierung und die Klemmbefestigung der Bauteile (3, 4) in den Löchern (1a) des Fingerträgers (1) gewährleistet.

4. Vorrichtung nach Anspruch 3, die einen rohrförmigen Fingerträger (1), der mit mehreren über seine Länge verteilten Löchern (1a) versehen ist, und Schüttelfinger (2) aufweist, die am Fingerträger mit Hilfe der Befestigungsvorrichtung gemäß Anspruch 3 befestigt sind, **dadurch gekennzeichnet, dass** die Montagelöcher (1a), die zur Aufnahme des Montageteils (3) bestimmt sind, und die Löcher (1a) des Fingerträgers, die zur Aufnahme des Klemmbefestigungsteils (4) der Befestigungsvorrichtung bestimmt sind, von Kegelflächen (11, 12) begrenzt werden.

5. Vorrichtung nach Anspruch 3, die einen rohrförmigen Fingerträger (1), der mit mehreren über seine Länge verteilten Löchern (1a') versehen ist, und Schüttelfinger (2) aufweist, die am Fingerträger mit Hilfe der Befestigungsvorrichtung gemäß Anspruch 3 befestigt sind, **dadurch gekennzeichnet, dass** Ringe (20), die ein Loch aufweisen, das von einer Kegelfläche (20a) für die Auflage und die Zentrierung der Kegelflächen (9 und 10) des Montageteils (3) bzw. des Klemmbefestigungsteils (4) begrenzt wird, in die zylindrischen Löcher (1a') eingelassen sind.

6. Vorrichtung nach Anspruch 5, **dadurch gekennzeichnet, dass** die Auflage- und Zentrierringe (20) aus einem verformbaren, vorzugsweise elastischen Material hergestellt sind.

7. Vorrichtung nach einem der Ansprüche 5 oder 6, **dadurch gekennzeichnet, dass** die Auflage- und Zentrierringe (20) mit einem äußeren Kragen (20b) versehen sind, der gegen die Außenfläche des Fingerträgers (1) verkeilt ist.

8. Vorrichtung nach einem der Ansprüche 3 bis 6, **dadurch gekennzeichnet, dass** der Winkel an der Spitze der Kegelabschnitte (9, 10, 11, 12, 20a) der Zentrier- und Klemmbefestigungsteile (3, 4) zwischen 5° und 30° liegt.

9. Vorrichtung nach einem der Ansprüche 1 bis 8, **dadurch gekennzeichnet, dass** das Montageteil (3), in das das nahe Ende (2b) des Schüttelfingers (2) eingesteckt wird, aus einem Kunststoff hergestellt wird, der elastische Verformungseigenschaften besitzt.

10. Vorrichtung nach Anspruch 9, **dadurch gekennzeichnet, dass** die Schüttelstange (2) einfach in die ferne axiale Aussparung (5') des Montageteils eingesteckt wird, wobei die solide Befestigung der Stange im Montageteil durch die Einschnürung des Kegelabschnitts (9) dieses letzteren gewährleistet wird, die aus dem Eindrücken des Kegelabschnitts (9) in das Montageloch (1a, 1a') des Fingerträgers (1) resultiert.

11. Vorrichtung nach einem der Ansprüche 1 bis 10, **dadurch gekennzeichnet, dass** das Klemmbefestigungsteil (4) aus Kunststoff hergestellt wird.

12. Vorrichtung nach einem der Ansprüche 1 bis 11, **dadurch gekennzeichnet, dass** das die Klemmbefestigung der Befestigungsteile (3,4) am Fingerträger (1) gewährleistende Mittel aus einem schraubenförmigen Klemmbefestigungssystem besteht.

13. Vorrichtung nach Anspruch 12, **dadurch gekennzeichnet, dass** das schraubenförmige Klemmbefestigungssystem eine Schraube (8) aufweist, die einen axialen Durchgang (14), der im Boden des Klemmbefestigungsteils (4) ausgebildet ist, und einen axialen Durchgang durchquert, der im nahen Ende des Montageteils (3) vorgesehen ist, wobei diese Schraube in eine axiale Aussparung (13) geschraubt wird, die im Endabschnitt des nahen Endes (2b) des Schüttelfingers (2) vorhanden ist, der in die Aussparung (5) des Montageteils (3) eingesteckt ist.

14. Vorrichtung nach Anspruch 12, **gekennzeichnet**
- einerseits **dadurch**, dass das nahe Ende (2b) der Schüttelfinger (2) zum Beispiel durch Kleben mittels einer dünnen Klebstoffschicht (19) in eine erste axiale Aussparung (5') des Montageteils (3) eingesteckt oder eingelassen wird, und
- andererseits **dadurch**, dass das schraubenförmige Klemmbefestigungssystem eine gewindeschneidende Schraube (8) aufweist, die einen axialen Durchgang (14) durchquert, der im Boden des Klemmbefestigungsteils ausgebildet ist, wobei diese Schraube in eine zweite axiale Aussparung (15') des Montageteils (3) geschraubt wird, die an dessen nahem Ende mündet.

15. Vorrichtung nach Anspruch 13, **dadurch gekennzeichnet, dass** die Seitenfläche der axialen Aussparung (13) des nahe Endes (2b) der Stange (2) mit Klebstoff bedeckt ist.

16. Vorrichtung nach einem der Ansprüche 13 oder 14, **dadurch gekennzeichnet, dass** die Endfläche des Klemmbefestigungsteils (4) mit einer Senkung (16) versehen ist, in die der Kopf (8a) der Schraube (8) in der Klemmbefestigungsstellung des Montageteils (3) und des Klemmbefestigungsteils (4) auf dem Fingerträger (1) versenkt ist.

17. Vorrichtung nach einem der Ansprüche 1 bis 16, **dadurch gekennzeichnet, dass** das Montageteil (3) einen fernen Bereich (17) aufweist, der sich ausgehend vom Klemmbefestigungsmittel (9) in Richtung des fernen Endes (2a) des Schüttelfingers (2) erstreckt, wobei dieser ferne Bereich (17) die Stange (2) umklammert, die den Schüttelfinger bildet.

18. Vorrichtung nach Anspruch 17, **dadurch gekennzeichnet, dass** der ferne Bereich (17) des Montageteils (3) die Form eines Kegels hat, dessen große Basis an das Zentrier- und Klemmbefestigungsmittel (9) des Bauteils (3) anschließt.

19. Vorrichtung nach einem der Ansprüche 1 bis 18, **dadurch gekennzeichnet, dass** die Zentrier- und Klemmbefestigungsteile (3, 4) so geformt sind, dass, wenn die Zentrier- und Klemmbefestigungsflächen (9, 10) der Bauteile mit den Auflageflächen (11, 12) des rohrförmigen Fingerträgers (1) in Kontakt kommen, ein kleiner Zwischenraum (18) zwischen dem nahen Ende des Montageteils (3) und dem Boden (19) der axialen Aussparung (6) des Zentrierteils (4) gebildet wird.

20. Tragbares Gerät für die oberirdische Ernte von Kleinfrüchten, das einen Schüttelkamm aufweist, der aus einem Fingerträger (1) und mehreren Fingern (2) besteht, die lösbar auf den Fingerträger montiert sind, **dadurch gekennzeichnet, dass** die Schüttelfinger (2) mit Hilfe von Befestigungsvorrichtungen nach einem der Ansprüche 1 bis 19 lösbar auf den Fingerträger montiert sind.
